# EUROPEAN PATENT SPECIFICATION

(11) **EP 3 074 113 B1**
(45) Date of publication and mention of the grant of the patent: **11.10.2017**
(21) Application number: 14809607.6
(22) Date of filing: 21.11.2014
(51) Int. Cl.: B01D 39/08

(54) **TOWER PRESS BELT, METHOD OF OPERATING AND METHOD OF CLEANING A TOWER PRESS COMPRISING SUCH A BELT**
TURMPRESSBAND, VERFAHREN ZUM BETREIBEN UND VERFAHREN ZUM REINIGEN EINER TURMPRESSE MIT EINEM SOLCHEN BAND
COURROIE DE PRESSE À TOUR, PROCÉDÉ DE FONTIONNEMENT ET PROCÉDÉ DE NETTOYAGE D' UNE PRESS À TOUR COMPRENANT UNE TELLE COURROIE

(30) Priority: 28.11.2013 GB 201321008
(43) Date of publication of application: 05.10.2016
(73) Proprietor: Clear Edge Germany GmbH, 47608 Geldern-Walbeck (DE)
(72) Inventor: SPARKS, Trevor, 47608 Geldern-Walbeck (DE)
(74) Representative: Wilson Gunn
(86) International application number: PCT/EP2014/075338
(87) International publication number: WO 2015/078795

(56) References cited:
- EP-A1- 1 129 755
- EP-A1- 2 500 077
- WO-A2-03/068271
- DE-U1-202013 003 527
- US-A- 6 099 725
- DATABASE WPI Week 199722 Thomson Scientific, London, GB; AN 1997-239784 XP002737140, & JP H09 75638 A (SHIKISHIMA BOSEKI KK) 25 March 1997 (1997-03-25)

## Description

The present invention relates to a belt (or filter cloth) for use in a tower press, a tower press comprising such a belt, a method of operating and a method of cleaning a tower press comprising such a belt.

Tower presses are a well known type of filtration apparatus comprising recessed plate membrane filters, in which the chambers are stacked horizontally with rollers at each end. In tower presses, a belt runs over the chambers and rollers, and as such the belt forms an elongated corrugated shape threading through the stack of horizontal chambers and rollers. Typically this belt is continuous, i.e. its two ends are joined together so as to form a closed loop. When filtration occurs, cake builds up on the horizontal part of the elongated corrugations of the belt, and this cake is removed by advancing the belt past the rollers at the end of each horizontal chamber, which encourages the cake to 'fall off as the belt turns through 180° to begin its next corrugation. Cake discharge is further encouraged by scrapers that are fixed to each plate and which bear onto the belt.

Tower presses of this kind are readily available, for example, from suppliers such as Outotec (for example the Outotec Larox® PF). In prior art tower presses, tower press belts are woven and finished so that they have the same properties (e.g. permeability, surface finish, etc) on each side ofthe belt. Therefore, in use, the belt passes over a roller to remove cake, and the "cake side" of the belt can then swap over without affecting the operational performance of the tower press. The tower press operator can choose the number of plate lengths that the belt advances during cake discharge. An even number of plate lengths means that a particular piece of belt will always have the same orientation during filtration, while an odd number means that a particular piece of belt will be used in alternating orientations.

When used in this conventional manner, the early stages of filtrate in each cycle can be cloudy, due to embedded solids from the last cycle being flushed out. This is because the belt has a 'tight' filtration surface on both sides, which will not readily allow free drainage of contaminants. It is therefore desirable to find a belt design that reduces the occurrence of filtrate cloudiness.

DE 20 2013 003527 U1 discloses a filter medium for forming a continuous belt filter comprising two woven layers, made of a weave arrangement that results in a belt having two sides (top and bottom) having different permeabilities and particle capture efficiencies.

According to a first embodiment ofthe present invention, there is provided a belt for use in a tower press according to claim 1. According to a second embodiment of the present invention, there is provided a tower press comprising a belt according to the first embodiment of the invention.

According to a third embodiment of the present invention, there is provided a method of operating a tower press comprising rollers and a belt according to the first embodiment of the invention, wherein the method comprises the steps of:
(a) aligning the belt such that a first surface of the belt is substantially always uppermost;
(b) performing filtration using the tower press;
(c) passing the belt over the rollers to remove cake build up;
(d) optionally washing the belt with spray bars;
(e) stopping the belt at a point at which the first surface of the belt is substantially always uppermost.

According to a fourth embodiment of the present invention, there is provided a method of cleaning a tower press, comprising the steps of:
(a) stopping a belt having a first surface and a second surface at a point at which the second surface of the belt is substantially always uppermost;
(b) back-flushing the belt.

The present invention gives rise to a filtrate with improved clarity (i.e. reduced cloudiness), in particular in the early stages of each cycle, as there is less solid material flushed out ofthe cloth at the beginning of a cycle. Further, as the belt is intended for use in one direction only, the lifetime ofthe belt is increased due to back flushing being more effective.

The belt of the present invention has a first surface and a second surface having differing permeability and/or particle capture properties. This can be achieved by one surface being fine (i.e. designed for maximum particle retention) and the other surface being coarse (i.e. allowing passage of particles). The fine surface is typically the 'filtration surface', and preferably it is the first surface and is presented uppermost during a filtration cycle. The coarse surface is typically the 'drainage surface', and preferably it is the second surface and is presented lowermost during a filtration cycle. Suitable ways of rendering one surface fine and one coarse include using a weave design that gives rise to more fibres on the fine surface and fewer fibres on the coarse surface, such as a twill or satin weave. This technique is described in for example Solid-Liquid Filtration: A User's Guide to Minimizing Cost & Environmental Impact, Maximizing Quality & Productivity Trevor Sparks (Butterworth-Heinemann, 1 Nov 2011, pages 137-138). Typically the number of fibres in a fine surface compared to the number of fibres in a coarse surface is approximately 3:1, although it is preferably approximately 4:1.

Further details concerning the construction of the belt of the present invention shall now be outlined. The belt shall preferably be of woven construction, preferably comprising or consisting of interlacing warp and weft yarns. Both warp and weft yarns may be formed from a range of materials including, but not limited to: PET (polyester), PA (polyamide), or PP (polyproplylene); all of which may be monofilament, multifilament or staple fibre construction or mixtures thereof. For both warp and weft yarns; suitable multifilament yarns may have a linear density in the range of 470-3300 dtex (g/10,000 m); suitable staple fibres may have a metric count (length in metres ofone gram of product) in the range 2 to 10 Nm (m/g); and suitable monofilament yarns may have a diameter in the range 0.16 to 0.6 mm.

Suitable weave designs may include the following: imbalanced twill weaves of: 2 x 1, 3 x 1, 3 x 2, 4 x 1, 4 x 2, 5 x 1, 6 x 2 construction or combinations of the same patterns, satin weaves of 3 x 1, 4 x 1, 5 x 1, 6 x 1, 7 x 1 or 6 x 2 construction, with the design reversing at intervals of every filter plate length. Most suitable designs include the following: twill weave 3 x 2, satin weaves of 3 x 1 or 5 x 1, with the design reversing at intervals of every filter plate length. By way of further example, a 3 x 1 twill may be reversed to a 1 x 3 twill design at intervals of each filter plate length.

Air permeability of a filter belt of the present invention may be in the range from 1 to 250 1/dm² min.

The capacity of a belt according to the present invention (in terms of liquid throughput) is higher than a conventional belt with an equivalent filtration surface on both sides, for example since the liquid only passes through one fine surface.

Furthermore, the belt suffers from a smaller and/or slower drop-off in performance since any particles which do pass through the fine surface will then pass straight through the coarse surface of the belt (in contrast with conventional belts in which the particle will frequently be trapped within the structure of the belt (i.e. it will not be able to pass out). This leads to a build-up of solid matter within the structure of the belt and a drop-off in throughput. Hence belts as envisaged in the present invention provide (i) a higher initial throughput for the same filtration performance in terms of filtrate clarity, (ii) more consistent throughput through the lifetime of the belt, and (iii) a longer lifetime as they do not block as quickly.

The belt is typically divided into at least two segments, and preferably there are multiple adjacent segments wherein each segment is in contact with two other segments; one either side. Typically the number of segments is at least equal to the number of plates in the filter press, and preferably there are extra segments to allow for other mechanical operations of the filter press, such as tensioning and returning the cloth to the top of the plate-pack. When the belt is laid flat, each segment has an upper face and a lower face. Typically the upper face of a first segment is the first surface, and the lower face of this first segment is the second surface. When this is the case, the upper face of each segment adjacent to the first segment is preferably the second surface, and the lower face of each segment adjacent to the first segment is the first surface. Preferably every second segment has the same configuration as the first segment, such that as one moves along the length of the belt, the upper face of each segment alternates between the first surface and the second surface, and the lower face of each segment alternates between the second surface and the first surface (such that each segment contain both first and second surfaces, but that they alternate between the upper and lower faces). Typically each segment is approximately one filter length long, such that, in operation on a tower press, the first surface is the uppermost surface on all chambers during a filtration cycle, and the second surface is the lowermost surface on all chambers during a filtration cycle.

The belt preferably comprises an RFID (Radio Frequency Identification) tag. The tag is typically placed between two adjacent segments, preferably between all adjacent segments. The tag serves to identify how far the belt needs to be moved along in between each filtration cycle in order to ensure that, for example, the first surface always remains the uppermost surface. In the instance where an RFID tag is positioned between each segment (i.e. one filter length apart), the tag would have to be moved on two 'positions'(i.e. two filter lengths) in order to keep the fine surfaces as the uppermost surface. An alternative would be to have a tag at an interval of a certain number of plate lengths, e.g. 2, 3, 4, 5 or 6.

The belt of the present invention can be used in a standard tower press. When used in a standard tower press, the belt is not flat but folded into elongated corrugations such that the first surface is substantially always uppermost, in other words the belt is arranged on the stacked horizontal chambers of a tower press such that the first surface is always above the second surface, with the second surface in contact with each horizontal chamber. Once filtration has occurred for a time period and cake has built up, the belt is passed over rollers (usually with scrapers) at the ends of each horizontal chamber, which removes the cake. The belt can them be repositioned to ensure that the first surface is substantially always uppermost. This is usually done by advancing the belt until an RFID tag identifies a stop point. As RFID tags are usually placed between segments in the belt, they mark the points where the first surface changes from being uppermost to lowermost. Alternatively other belt position identifiers can be used such as optical sensors, metallic/magnetic/seam sensors, or index wheels which detect the actual movement of the cloth.

Optionally, the belt can be back-flushed between each, or a certain number of, filtration cycle(s) by positioning the belt such that the second surface is substantially always uppermost, and temporarily running a wash liquid (possibly a clean filtrate) in the opposite direction to that present during filtration. Once this back-flushing is complete, the belt can be advanced to its regular position with the first surface substantially always uppermost. Again, RFID (or other) tags can be used to mark the stop points for back-flushing and filtration.

In order that the present invention may be more readily understood, a specific embodiment thereof will now be described by way of example only, with reference to the accompanying figures:
Figure 1 shows a schematic diagram of a belt according to the invention.
Figure 2 shows a tower press according to the invention, comprising the belt of Figure 1.

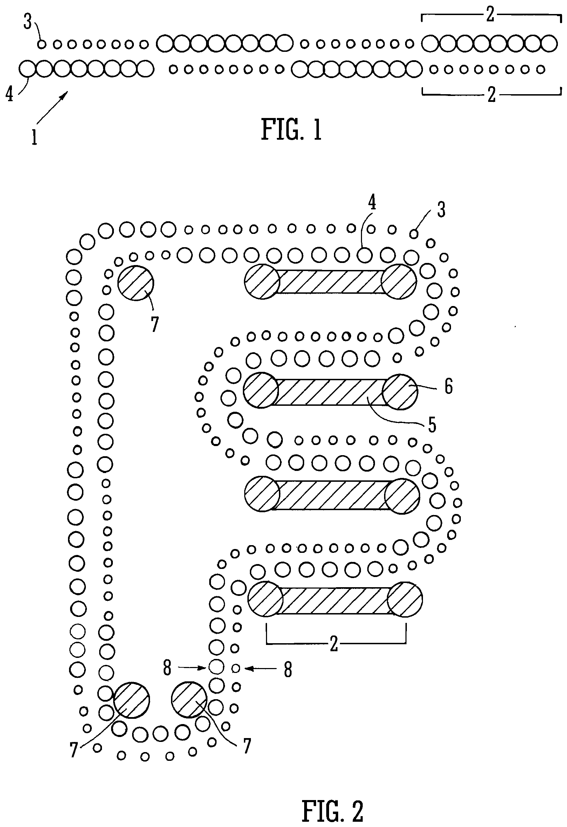

In Figure 1, a belt 1 comprises four segments 2. Each segment 2 comprises an upper face 3 and a lower face 4. The combination of four upper faces forms the first surface, and the combination of four lower faces forms the second surface. In the segment 2, depicted at the far right of the Figure, the upper face is a coarse draining surface and the lower surface is a fine filtration surface. In the adjacent segment, these surfaces are reversed, and indeed the surfaces alternate along the length of the belt.

Figure 2 shows the belt of Figure 1 when placed within a tower press comprising horizontal chambers 5 and rollers 6. As can be seen, within the horizontal stack of chambers the upper face 3 of each segment 2 is substantially always uppermost, and the lower face 4 of each segment 2 is substantially always lowermost and in contact with the horizontal chambers 5. The belt typically moves down the stack, and when it leaves the bottom chamber it runs over rollers 7 and rejoins the top chamber. A belt wash 8 is optionally provided after the belt leaves the bottom chamber.

## Claims

1. A belt for use in a tower press, the belt comprising a first surface, the filtration surface and a second surface, the drainage surface, having differing properties, the differing properties comprising differing permeability and/or particle capture properties, and wherein the belt is divided into at least two segments, wherein each segment is one filter length long and when the belt is laid flat, each segment has an upper face and a lower face, such that the upper face of a first segment is the first surface and the lower face of this first segment is the second surface, and that the upper face of each segment adjacent to the first segment is the second surface and the lower face of each segment adjacent to the first segment is the first surface.

2. A belt according to claim 1, wherein the belt is divided into at least two segments, wherein when the belt is laid flat each segment has an upper face and a lower face, and wherein:
(a) the upper faces of all segments alternate, from one end of the belt, between the first surface and the second surface;
(b) the lower faces of all segments alternate, from the same end of the belt, between the second surface and the first surface.

3. A belt according to claim 1 or claim 2, wherein an RFID tag is present between at least one pair of adjacent segments.

4. A belt according to claim 3, wherein an RFID tag is present between each adjacent pair of segments.

5. A belt according to any preceding claim, wherein the belt is woven.

6. A belt according to claim 5, wherein the belt comprises interlaced warp and weft multifilament yarns having a linear density of 470-3300 dtex (g/10,000m).

7. A belt according to claim 5, wherein the belt comprises interlaced warp and weft monofilament yarns having a diameter of 0.16 - 0.6 mm.

8. A belt according to claim 5, wherein the belt comprises interlaced warp and weft staple fibres having a metric count in the range of 2-10 Nm (m/g).

9. A belt according to any of claims 5-8, wherein the belt is woven to a twill or satin design.

10. A tower press comprising a belt according to any of claims 1-9.

11. A method of operating a tower press comprising rollers and a belt according to any of claims 1-9, wherein the method comprises the steps of:
(a) aligning the belt such that a first surface of the belt is substantially always uppermost;
(b) performing filtration using the tower press;
(c) passing the belt over the rollers to remove cake build up;
(d) optionally washing the belt using spray bars;
(e) stopping the belt at a point at which the first surface of the belt is substantially always uppermost.

12. A method of cleaning a tower press according to claim 10, comprising the steps of:
(a) stopping a belt having a first surface and a second surface at a point at which the second surface of the belt is substantially always uppermost;
(b) back-flushing the belt.

13. A method according to either of claims 11 or 12, wherein RFID tags are used to determine at what position to stop the belt.

## Patentansprüche

1. Band zur Verwendung in einer Turmpresse, wobei das Band eine erste Oberfläche oder Filtrationsoberfläche, und eine zweite Oberfläche oder Ablaufoberfläche mit jeweils unterschiedlichen Eigenschaften umfasst, wobei die unterschiedlichen Eigenschaften eine unterschiedliche Durchlässigkeits- und/oder Partikelerfassungseigenschaften umfassen, und wobei das Band in zumindest zwei Segmente unterteilt ist, wobei jedes Segment eine Filterlänge lang ist, und, wenn das Band flach aufgelegt ist, jedes Segment eine obere und eine untere Seite aufweist, so dass die obere Seite eines ersten Segments die erste Oberfläche ist, und die untere Seite dieses ersten Segments die zweite Oberfläche ist, und so dass die obere Seite jedes Segments benachbart zu dem ersten Segment die zweite Oberfläche ist, und die untere Seite jedes Segments benachbart zu dem ersten Segment die erste Oberfläche ist.

2. Band nach Anspruch 1, wobei das Band in zumindest zwei Segmente unterteilt ist, wobei, wenn das Band flach aufgelegt ist, jedes Segment eine obere Seite und eine untere Seite aufweist, und wobei:
(a) die oberen Seiten aller Segmente sich von einem Ende des Bandes aus zwischen der ersten Oberfläche und der zweiten Oberfläche abwechseln;
(b) die unteren Seiten aller Segmente sich von demselben Ende des Bandes aus zwischen der zweiten Oberfläche und der ersten Oberfläche abwechseln.

3. Band nach Anspruch 1 oder Anspruch 2, wobei ein RFID-Tag zwischen zumindest einem Paar benachbarter Segmente vorhanden ist.

4. Band nach Anspruch 3, wobei ein RFID-Tag zwischen jedem benachbarten Paar von Segmenten vorhanden ist.

5. Band nach einem der vorhergehenden Ansprüche, wobei das Band gewebt ist.

6. Band nach Anspruch 5, wobei das Band miteinander verschränkte Kett- und Schuss-Multifilamentgarne mit einer linearen Dichte von 470 bis 3300 dtex (g/10.000 m) umfasst.

7. Band nach Anspruch 5, wobei das Band miteinander verschränkte Kett- und Schuss-Monofilamentgarne mit einem Durchmesser von 0,16 bis 0,6 mm umfasst.

8. Band nach Anspruch 5, wobei das Band miteinander verflochtene Kett- und Schuss-Stapelfasern mit einer metrischen Zählung in dem Bereich von 2 bis 10 Nm (m/g) umfasst.

9. Band nach einem der Ansprüche 5 bis 8, wobei das Band zu einem Köper- oder Atlasaufbau verwoben ist.

10. Turmpresse umfassend ein Band nach einem der Ansprüche 1 bis 9.

11. Verfahren zum Betrieb einer Turmpresse umfassend Rollen und ein Band nach einem der Ansprüche 1 bis 9, wobei das Verfahren die folgenden Schritte umfasst:
(a) Ausrichten des Bandes auf solche Weise, dass eine erste Oberfläche des Bandes im Wesentlichen immer die oberste ist;
(b) Durchführen einer Filtration unter Verwendung der Turmpresse;
(c) Führen des Bandes über die Rollen, um aufgebauten Filterkuchen zu entfernen;
(d) optionales Waschen des Bandes unter Verwendung von Sprühbalken;
(e) Stoppen des Bandes an einem Punkt, an dem die erste Oberfläche des Bandes im Wesentlichen immer die oberste ist.

12. Verfahren zum Reinigen einer Turmpresse nach Anspruch 10, umfassend die folgenden Schritte:
(a) Stoppen eines Bandes mit einer ersten Oberfläche und einer zweiten Oberfläche an einem Punkt, an dem die zweite Oberfläche des Bandes im Wesentlichen immer die oberste ist;
(b) Rückspülen des Bandes.

13. Verfahren nach einem der Ansprüche 11 oder 12, wobei RFID-Tags verwendet werden, um zu bestimmen, an welcher Position das Band gestoppt werden soll.

## Revendications

1. Bande pour une utilisation dans une presse à tour, la bande comprenant une première surface, la surface de filtration, et une seconde surface, la surface de drainage, ayant des propriétés différentes, les propriétés différentes comprenant des propriétés différentes de perméabilité et/ou de capture de particules, et dans laquelle la bande est divisée en au moins deux segments, dans laquelle chaque segment est long d'une longueur de filtre et lorsque la bande est posée à plat, chaque segment a une face supérieure et une face inférieure, de telle sorte que la face supérieure d'un premier segment est la première surface et la face inférieure de ce premier segment est la seconde surface, et que la face supérieure de chaque segment adjacent au premier segment est la seconde surface et la face inférieure de chaque segment adjacent au premier segment est la première surface.

2. Bande selon la revendication 1, dans laquelle la bande est divisée en au moins deux segments, dans laquelle lorsque la bande est posée à plat, chaque segment a une face supérieure et une face inférieure, et dans laquelle :
(a) les faces supérieures de tous les segments alternent, depuis une extrémité de la bande, entre la première surface et la seconde surface ;
(b) les faces inférieures de tous les segments alternent, depuis la même extrémité, entre la seconde surface et la première surface.

3. Bande selon la revendication 1 ou la revendication 2, dans laquelle une étiquette RFID est présente entre au moins une paire de segments adjacents.

4. Bande selon la revendication 3, dans laquelle une étiquette RFID est présente entre chaque paire de segments adjacents.

5. Bande selon l'une quelconque des revendications précédentes, dans laquelle la bande est tissée.

6. Bande selon la revendication 5, dans laquelle la bande comprend des fils multifilaments de chaîne et de trame entrelacés ayant une densité linéaire de 470 à 3 300 dtex (g/10 000 m).

7. Bande selon la revendication 5, dans laquelle la bande comprend des fils monofilaments de chaîne et de trame entrelacés ayant un diamètre de 0,16 à 0,6 mm.

8. Bande selon la revendication 5, dans laquelle la bande comprend des fibres discontinues de chaîne et trame entrelacées ayant un numéro métrique dans l'intervalle de 2 à 10 Nm (m/g).

9. Bande selon l'une quelconque des revendications 5 à 8, dans laquelle la bande est tissée jusqu'à une conception sergée ou satin.

10. Presse à tour comprenant une bande selon l'une quelconque des revendications 1 à 9.

11. Procédé de fonctionnement d'une presse à tour comprenant des rouleaux et une bande selon l'une quelconque des revendications 1 à 9, dans lequel le procédé comprend les étapes de :
(a) aligner la bande de telle sorte qu'une première surface de la bande est pratiquement toujours la plus haute ;
(b) réaliser une filtration en utilisant la presse à tour ;
(c) faire passer la bande au-dessus des rouleaux pour retirer une accumulation de gâteau ;
(d) laver facultativement la bande en utilisant des barres de pulvérisation ;
(e) arrêter la bande à un point auquel la première surface de la bande est pratiquement toujours la plus haute.

12. Procédé de nettoyage d'une presse à tour selon la revendication 10, comprenant les étapes de :
(a) arrêter une bande ayant une première surface et une seconde surface à un point auquel la seconde surface de la bande est pratiquement toujours la plus haute ;
(b) rétro-rincer la bande.

13. Procédé selon l'une ou l'autre des revendications 11 ou 12, dans lequel des étiquettes RFID sont utilisées pour déterminer la position à laquelle la bande doit être arrêtée.
